# EUROPÄISCHE PATENTSCHRIFT

(11) **EP 3 315 883 B1**
(45) Veröffentlichungstag und Bekanntmachung des Hinweises auf die Patenterteilung: **05.04.2023**
(21) Anmeldenummer: 17195265.8
(22) Anmeldetag: 06.10.2017
(51) Int. Cl.: F25D 23/12

(54) **KÄLTEGERÄT MIT GETRÄNKEDISPENSER**
REFRIGERATION DEVICE WITH DRINKS DISPENSER
APPAREIL FRIGORIFIQUE POURVU DE DISTRIBUTEUR DE BOISSONS

(30) Priorität: 27.10.2016 DE 102016221211
(43) Veröffentlichungstag der Anmeldung: 02.05.2018
(73) Patentinhaber: BSH Hausgeräte GmbH, 81739 München (DE)
(72) Erfinder: Eicher, Max, 80689 München (DE); Becke, Christoph, 83109 Grosskarolinenfeld (DE); Hartwein, Christine, 85405 Nandlstadt (DE); Angele, Boris, 86911 Diessen (DE)

(56) Entgegenhaltungen:
- CN-A- 103 148 665
- GB-A- 2 198 512
- JP-A- H09 126 649
- JP-A- H10 132 456
- KR-U- 950 033 940
- US-A- 3 208 641
- US-A- 3 476 295
- US-A- 5 862 952
- US-A1- 2010 293 986
- US-A1- 2011 132 021

## Beschreibung

Die vorliegende Erfindung betrifft ein Kältegerät, insbesondere ein Haushaltskältegerät, mit einem Dispenser, der zum Ausgeben diverser Getränke geeignet ist. Ein solches Kältegerät ist z. B. aus DE 89 01 630 U1 bekannt.

DE 89 01 630 U1 beschreibt eine Kühlschranktür, an deren Außenseite in einem unteren Bereich eine Dispensernische ausgepart ist. In einer Decke der Dispensernische sind mehrere Durchgänge gebildet, in die eine mit einem aufgeschraubten Ventil versehene Flasche von einem Lagerfach aus eingeführt werden kann, so dass ein Auslass des Ventils in die Dispensernische hineinragt und dort betätigt werden kann, um das Ventil zu öffnen und so gekühltes Getränk aus einer der Flaschen abzuzapfen, ohne dafür die Tür geöffnet werden muss.

CN 103148665 A offenbart eine modular integrierte Getränkemaschine, wobei an einer Tür eines Kältegeräts ein transparentes Panel und eine Plattform vorgesehen sind. Die Plattform weist Öffnungen auf. In eine Öffnung kann ein Behälterventil 6 eingesteckt werden, wobei das Behälterventil mit einem Behälter verbunden ist und der Behälter durch das Behälterventil fixiert ist. Ein Betätigungselement ist an dem Behälterventil montiert und mit dem Behälterventil verbunden.

JP H10 132456 A offenbart ein Kältegerät mit einer Öffnung in der Tür, wobei ein Wassertank in diese Öffnung eingesetzt ist. Der Wassertank weist einen Hahn auf. Die Öffnung und der Hahn sind durch eine kleine Tür abgedeckt.

Aus der US 3 476 295 A und der US 3 208 641 A sind entsprechend wie in der JP H10 132456 A nur Ausführungen bekannt, bei denen ein Zapfhahn mit einem Rohr als Auslass und einem direkt daran angeordneten Sperrhebel vorgesehen sind.

Dokument US 5,862,952 A offenbart einen Getränkedispenser, welcher ein Reservoir, ein Dispenserpanel, einen Dispenserauslass und eine Handhabe umfasst. Eine Ausgusstülle ist im Reservoir ausgebildet und in Eingriff mit einer Kappe. Ein Ventil ist in der Kappe montiert, so dass wenn das Ventil geöffnet wird, das Wasser innerhalb des Reservoirs in die Ausgangstülle gespült wird. Die Ausgangstülle des Reservoirs ist eingefügt in die Verbindungsöffnung des Dispenserpanels. Die Verbindungsöffnung verbleibt gefüllt mit Wasser. Eine Fixierplatte ist fixiert am unteren Ende der Verbindungsöffnung. In der Fixierplatte ist eine Vielzahl von ersten Dispenseröffnungen ausgebildet. Unterhalb der Fixierplatte ist eine Verschiebeplatte positioniert, in welcher eine Vielzahl von zweiten Dispenseröffnungen ausgebildet ist. Durch Verschieben der Verschiebeplatte können die ersten und zweiten Dispenseröffnungen in Überlapp gebracht werden, so dass Wasser aus dem Reservoir herausfließen kann. Eine Spannfeder ist installiert an einer Seite der Verschiebeplatte und übt eine Spannkraft auf die Verschiebeplatte aus. Die Verschiebeplatte ist dadurch in einer Stellung gehalten, dass sich die ersten und zweiten Dispenseröffnungen nicht überlappen. Durch Betätigen einer Handhabe ist die Verschiebeplatte verschiebbar, um einen Überlapp der ersten und zweiten Dispenseröffnungen zu ermöglichen. Die Handhabe ist verschwenkbar an der Innenseite des Dispenserpanels durch ein Schanier gelagert. Weiterer relevanter Stand der Technik ist in KR950033940U zu finden.

Die Durchgänge und die in sie eingreifenden Ventilgehäuse stellen eine Wärmebrücke zwischen der Umgebung und dem Lagerfach dar, die den Energiebedarf zum Kühlen des Lagerfachs deutlich erhöht. Wenn dieser Mehrverbrauch zu einer Herabstufung der Energieeffizienzklasse des Geräts führt, sind erhebliche Absatzeinbußen die Folge.

Eine Aufgabe der Erfindung ist daher, ein Kältegerät mit einem zur Abgabe diverser Getränke geeigneten Dispenser anzugeben, bei dem der durch den Dispenser verursachte Mehrverbrauch an Energie minimiert ist.

Die Aufgabe wird gelöst durch ein Kältegerät mit den Merkmalen des unabhängigen Anspruchs 1. Bevorzugte Ausführungsformen sind Gegenstand der abhängigen Ansprüche.

Die Aufgabe wird insbesondere gelöst, indem bei einem Kältegerät, insbesondere Haushaltskältegerät, mit einem wärmedämmenden Gehäuse, das ein Lagerfach für Kühlgut umgibt und wenigstens einen Durchgang zwischen Lagerfach und einer Dispensernische außerhalb des wärmedämmenden Gehäuses aufweist, und einer Behälter-Ventil-Baugruppe, die an dem Gehäuse den Durchgang durchsetzend lösbar montiert ist, eine Abdeckung, durch die die Dispensernische verschließbar ist, an das Gehäuse angelenkt ist. Die Abdeckung hat zwar keinen Einfluss auf die Wärmeleitfähigkeit des Durchgangs an sich, doch verhindert sie, dass in der Dispensernische abgekühlte Luft sich frei in der Umgebung verteilt. Stattdessen kühlt die Luft in der Dispensernische allmählich ab, indem sie über das Gehäuse Wärme an das Lagerfach abgibt, so dass der Temperaturgradient entlang des Durchgangs abnimmt und deshalb weniger Wärme von der Dispensernische in das Lagerfach fließt.

Das Gehäuse kann wenigstens ein Sichtfenster aufweisen, durch das ein in dem Lagerfach angeordneter Behälter der Behälter-Ventil-Baugruppe sichtbar ist. So kann ein Benutzer ggf. anhand einer Beschriftung oder einer anderweitigen Kennzeichnung des Behälters dessen Inhalt identifizieren, ohne das Lagerfach öffnen zu müssen.

Wenn der Behälter seinerseits zumindest in einem dem Sichtfenster zugewandten Bereich lichtdurchlässig ist, kann ein Benutzer auch den Füllstand des Behälters erkennen, ohne die Tür des Kältegeräts öffnen oder den Behälter ausbauen zu müssen.

Die Abdeckung kann sich auch über das Sichtfenster erstrecken.

Insbesondere in letzterem Falle ist es vorteilhaft, wenn die Abdeckung wenigstens teilweise transparent ist, so dass durch die Abdeckung und das Sichtfenster hindurch der Behälter sichtbar ist.

Insbesondere kann die Abdeckung die gesamte Tür überdecken. Wenn beispielsweise die Dispensernische in an sich bekannter Weise in einer Tür des Kältegeräts untergebracht ist, kann die Abdeckung die gesamte Tür überdecken.

An der Behälter-Ventil-Baugruppe kann ein Adapterabschnitt vorgesehen sein. Insbesondere kann der Adapterabschnitt an die Form des Durchgangs angepasst sein. Insbesondere kann der Adapterabschnitt den Querschnitt des Durchgangs ausfüllen. So kann das Vordringen von warmer Umgebungsluft aus der Dispensernische zum Behälter begrenzt und der Energieverbrauch des Kältegeräts weiter reduziert werden.

Der Behälter kann in eine Nische an einer Innenseite des Gehäuses eingesetzt sein. So können der Behälter und sein Inhalt selber zur thermischen Isolation des Lagerfachs beitragen.

Der Breite nach sollte der Behälter die Nische vorzugsweise ausfüllen.

Vorzugsweise weist der Behälter in einem oberen Bereich einen Deckel auf, und das Ventil ist an einem Auslass in einem unteren Bereich des Behälters lösbar montiert. Da im Gegensatz zum Ventil der Deckel nicht hermetisch schließen muss, können seine Abmessungen groß sein, so dass, wenn der Deckel entfernt ist, der Behälter sowohl leicht zu reinigen als auch einfach wiederzubefüllen ist.

In der Vertikalen kann der Behälter spielhaltig in der Nische aufgenommen sein, um das Einführen des Adapterabschnitts in den Durchgang zu erleichtern.

Das Kältegerät kann mehrere jeweils einen Behälter und einen Auslass umfassende Baugruppen aufweisen.

Um eine platzsparende Unterbringung zu ermöglichen, können die mehreren Behälter ebene, einander berührende Seitenwände aufweisen.

Gegenstand der Erfindung ist ferner ein speziell für den Einsatz in der oben beschriebenen die Behälter-Ventil-Baugruppe angepasstes Ventil. Dieses Ventil umfasst einen sich ringförmig um eine Öffnung erstreckenden Ventilsitz und einen Schließkörper, der in einer geschlossenen Stellung rings um die Öffnung am Ventilsitz anliegt und zwischen der geschlossenen und einer offenen Stellung um einen Angelpunkt kippbar ist, an dem Ventilsitz und Schließkörper einander in der offenen Stellung berühren. Dieses Ventil ist einerseits einfach und kostengünstig zu fertigen, andererseits ist es im Kältegerät durch einen einfachen Mechanismus betätigbar, wie aus der nachfolgenden Beschreibung im Detail deutlich werden wird.

Ein Adapterabschnitt, in dem der Ventilsitz gebildet ist, kann ein Schraubgewinde aufweisen, um die Anbringung an einem austauschbaren Behälter für ein abzuzapfendes Getränk zu vereinfachen.

Der Schließkörper kann durch eine Feder in die geschlossene Stellung beaufschlagt sein. Die Feder kann aus Sicherheitsgründen vorgesehen sein, wenn das Ventil mit dem Druck des Behälterinhalts schließt; sie ermöglicht aber auch, wie im Ausführungsbeispiel gezeigt, eine Anordnung von Ventilsitz und Dichtkörper, bei der das Ventil entgegen dem Druck des Behälterinhalts schließt.

Wenn an einem vom Schließkörper abgewandten Ende des Stifts eine Kappe vorgesehen ist, kann die Feder zwischen der Kappe und einer Grundplatte, in der die Öffnung des Ventils gebildet ist, komprimiert sein.

Wenn diese Kappe mit dem Stift lösbar verbunden, insbesondere schraubverbunden ist, ist es besonders einfach, das Ventil zu zerlegen und zu reinigen, z.B. wenn ein Behälter geleert ist und durch einen vollen ersetzt werden soll.

Zum Öffnen des Ventils kann ein Betätigungsabschnitt vorgesehen sein, der vom Schließkörper in Durchflussrichtung des Ventils absteht. Indem der Betätigungsabschnitt quer zur Durchflussrichtung ausgelenkt wird, wird der Schließkörper gekippt und dadurch das Ventil geöffnet.

Um das Getränk, das das Ventil passiert, verlustfrei aufzufangen und in ein unter das Ventil gehaltenes Auffanggefäß zu leiten, ist ein becherförmiges Element hilfreich, das an dem Betätigungsabschnitt angebracht ist und im Becherboden eine Auslassöffnung für das Getränk aufweist.

Um sicherzustellen, dass durch die Öffnung hindurchtretendes Getränk vollständig in das becherförmige Element gelangt, kann ein sich um den Ventilsitz herum ersteckender Steg vorgesehen sein, der in das becherförmige Element eingreift.

In anderen Worten betrifft ein Aspekt ein Ventil, insbesondere für die Behälter-Ventil-Baugruppe eines Kältegeräts wie hierin beschrieben, mit einem sich ringförmig um eine Öffnung erstreckenden Ventilsitz und einem Schließkörper, der in einer geschlossenen Stellung rings um die Öffnung am Ventilsitz anliegt und zwischen der geschlossenen und einer offenen Stellung um einen Angelpunkt kippbar ist, an dem Ventilsitz und Schließkörper einander in der offenen Stellung berühren.

Vorzugsweise ist der Ventilsitz in einem Adapterabschnitt gebildet ist. Vorzugsweise weist der Ventilsitz ein Schraubgewinde zum Anschrauben an einen Behälter auf.

Vorzugsweise erstreckt sich ein mit dem Schließkörper fest verbundener Stift durch die Öffnung. Alternativ oder zusätzlich ist der Schließkörper durch eine Feder in die geschlossene Stellung beaufschlagt.

Vorzugsweise ist an einem vom Schließkörper abgewandten Ende des Stifts eine Kappe vorgesehen ist und die Feder zwischen der Kappe und einer Grundplatte, in der die Öffnung gebildet ist, komprimiert.

Vorzugsweise ist die Kappe mit dem Stift lösbar verbunden, insbesondere schraubverbunden.

Vorzugsweise steht ein Betätigungsabschnitt vom Schließkörper in Durchflussrichtung des Ventils ab.

Vorzugsweise ist an dem Betätigungsabschnitt ein einen Durchlass im Becherboden aufweisendes becherförmiges Element angebracht. Weiterhin vorzugsweise greift ein Steg, der sich um den Ventilsitz herum erstreckt, in das becherförmige Element ein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Außenansicht einer Türbaugruppe eines erfindungsgemäßen Kältegeräts;
- Fig. 2: einen horizontalen Schnitt durch die Türbaugruppe in Höhe von darin montierten Getränkebehältern
- Fig. 3: einen Schnitt durch die Türbaugruppe in Höhe einer Dispensernische;
- Fig. 4: eine zu Fig. 1 analoge Ansicht der Türbaugruppe ohne Behälter;
- Fig. 5: eine perspektivische Ansicht der Tür von ihrer Innenseite her;

- Fig. 6: einen Schnitt durch eine Behälter-Ventil-Baugruppe; und
- Fig. 7: das Ventil der Behälter-Ventil-Baugruppe in offener Stellung; und
- Fig. 8: ein Kältegerät gemäß einer zweiten Ausgestaltung der Erfindung, mit Abdeckung in offener Stellung.

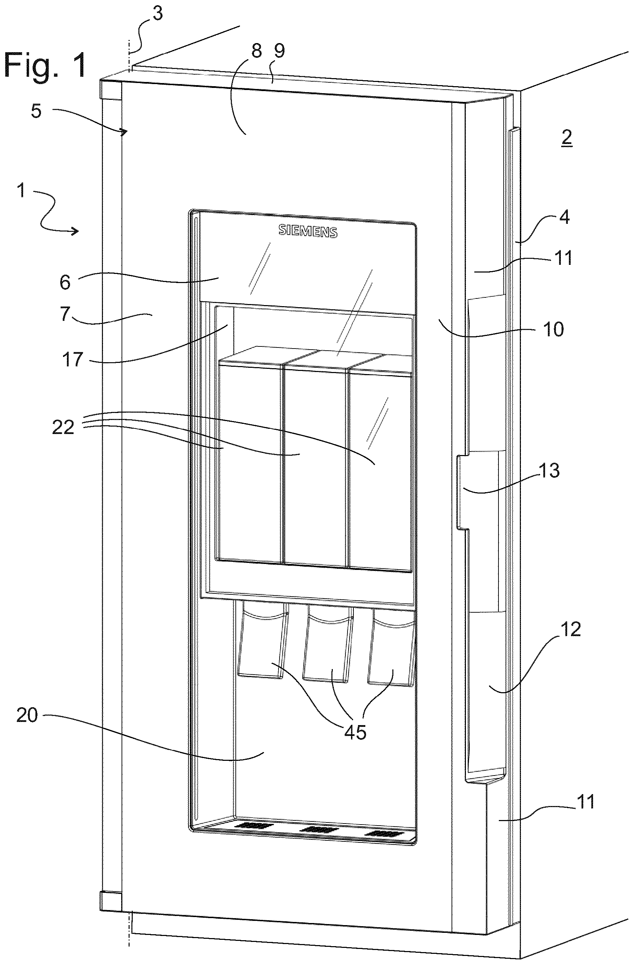

In Fig. 1 bilden eine Türbaugruppe 1 und ein nur zum Teil dargestellter Korpus 2 ein Gehäuse eines Haushaltskältegeräts, das ein Lagerfach für Kühlgut umgibt. Die Türbaugruppe 1 ist an den Korpus 2 um eine Achse 3 schwenkbar angelenkt.

Die Türbaugruppe 1 umfasst eine das Lagerfach verschließende Tür 4 im engeren Sinne und eine Abdeckung 5, die relativ zur Tür 4 um dieselbe Achse 3 schwenkbar ist. In der Ansicht der Fig. 1 ist die Tür 4 zum größten Teil von der Abdeckung 5 verdeckt bzw. frontseitig bedeckt.

Die Abdeckung 5 umfasst eine Fensterscheibe 6 aus klarem oder getöntem Glas oder Kunststoff, hier eingefasst von einem Rahmen 7. Der Rahmen 7 kann undurchsichtig bzw. intransparent bzw. opak sein. Eine obere Leiste des Rahmens 7 ist im Schnitt L-förmig, mit einem sich von der Fensterscheibe 6 aus vertikal nach oben erstreckenden Schenkel 8 und einem von einer Oberkante des Schenkels 8 aus zum Korpus 2 hin abgewinkelten, sich über eine obere Flanke der Tür 4 hinweg erstreckenden Schenkel 9. In entsprechender Weise umfasst eine rechte Leiste des Rahmens einen sich vom rechten Rand der Fensterscheibe 6 aus in Breitenrichtung der Türbaugruppe 1 erstreckenden Schenkel 10 und einen zum Korpus abgewinkelten Schenkel 11, der allerdings durch eine Griffaussparung 12 in eine obere und eine untere Hälfte zweigeteilt ist. Ein Mittelstück 13 der Griffaussparung 12 erstreckt sich vom Rand her bis in den Schenkel 10 hinein.

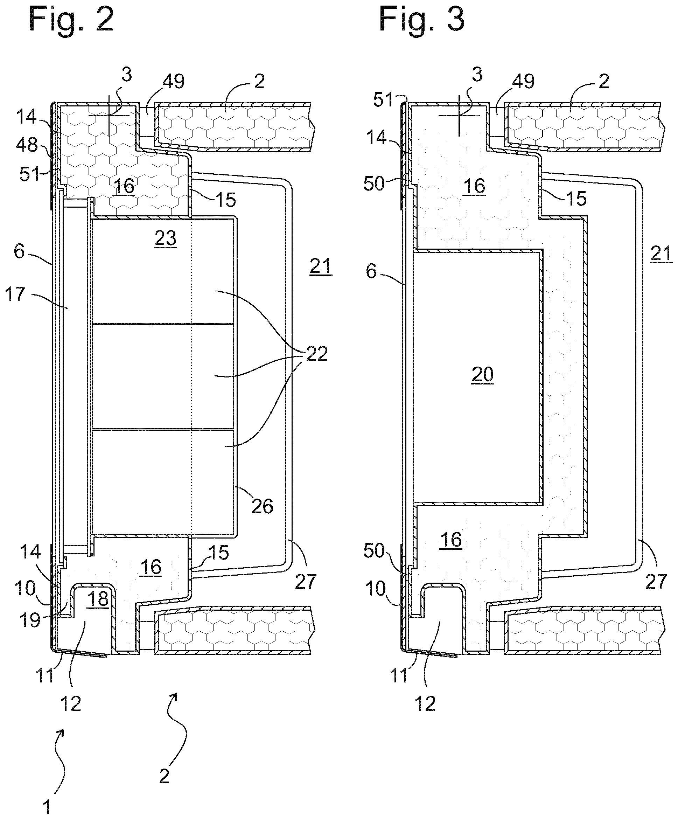

Fig. 2 zeigt einen horizontalen Schnitt durch die Türbaugruppe 1 entlang einer Ebene, die in Höhe der Griffaussparung 12 knapp oberhalb des Mittelstücks 13 verläuft. Die Tür 4 umfasst in fachüblicher Weise feste Außen- und Innenwände 14, 15, die entlang ihrer Ränder verbunden sind, um einen mit wärmedämmendem Schaumstoff 16 verfüllten Hohlraum zu bilden. Hier ist in Außen- und Innenwand 14, 15 je eine Öffnung geschnitten, in die eine Isolierglasscheibe 17 eingefügt und mit den Wänden 14, 15 dicht verbunden ist. In einer seitlichen Flanke der Tür 4 ist eine seitwärts offene Griffnut 18 ausgespart bzw. eine Griffnut 18 vorgesehen. An ihrer der Abdeckung 5 zugewandten Seite ist die Griffnut 18 durch einen Steg 19 begrenzt. Der Schenkel 10 der Abdeckung steht seitwärts über den Steg 19 über, so dass ein Benutzer, der in die Griffaussparung 12 in Höhe der Schnittebene der Fig. 2 eingreift, den Schenkel 10 der Abdeckung 5 zu fassen bekommt, nicht aber zwangsläufig auch den Steg 19 der Tür 4, so dass der Benutzer, wenn der Benutzer den Schenkel 10 zu sich heranzieht, die Abdeckung 5 um die Achse 3 schwenkt, nicht aber die Tür 4.

Durch das Schwenken (allein) der Abdeckung 5 um die Achse 3 wird eine Dispensernische 20 zugänglich, die in einem unteren Teil der Tür 4 ausgespart und in Fig.3 in einem horizontalen Schnitt durch die Türbaugruppe 1 gezeigt ist.

In Höhe des Mittelstücks 13 hingegen ist der Rand des Schenkels 10 mit dem Steg 19 bündig, so dass ein Benutzer, der in Höhe des Mittelstücks angreift, in die Griffnut 18 hineingreift und so die gesamte Türbaugruppe 1 um die Achse 3 schwenkt, und ein Lagerfach 21 für Kühlgut im Innern des Korpus 2 zugänglich wird.

Fig.2 zeigt im Schnitt mehrere Getränkebehälter 22, die in eine von der Isolierglasscheibe 17 und von an diese anschließenden Flanken der Innenwand 15 der Tür 4 begrenzten und zu dem Lagerfach 21 hin offenen Nische 23 untergebracht sind. Die Getränkebehälter 22 füllen die Nische 23 in Breitenrichtung im Wesentlichen spielfrei aus. Wie in Fig. 1 zu erkennen, sind die Getränkebehälter 22 durch die Isolierglasscheibe 17 und die Fensterscheibe 6 hindurch sichtbar. Sie können mit einer ihren Inhalt bezeichnenden, durch die Scheiben 6, 17 hindurch sichtbaren Beschriftung versehen sein. Vorzugsweise sind die Getränkebehälter 22 aus einem transparenten Kunststoff gefertigt, so dass Farbe und Füllstand ihres Inhalts durch die Scheiben 6, 17 hindurch sichtbar sind.

Unter jedem Getränkebehälter 22 ist in der Dispensernische 20 je ein Bedienpaddel 45 montiert, das dazu dient, ein Ventil zu öffnen und ein in der Dispensernische 20 gegen das Bedienpaddel 45 angedrücktes Gefäß mit Getränk aus dem darüberliegenden Behälter 22 zu befüllen.

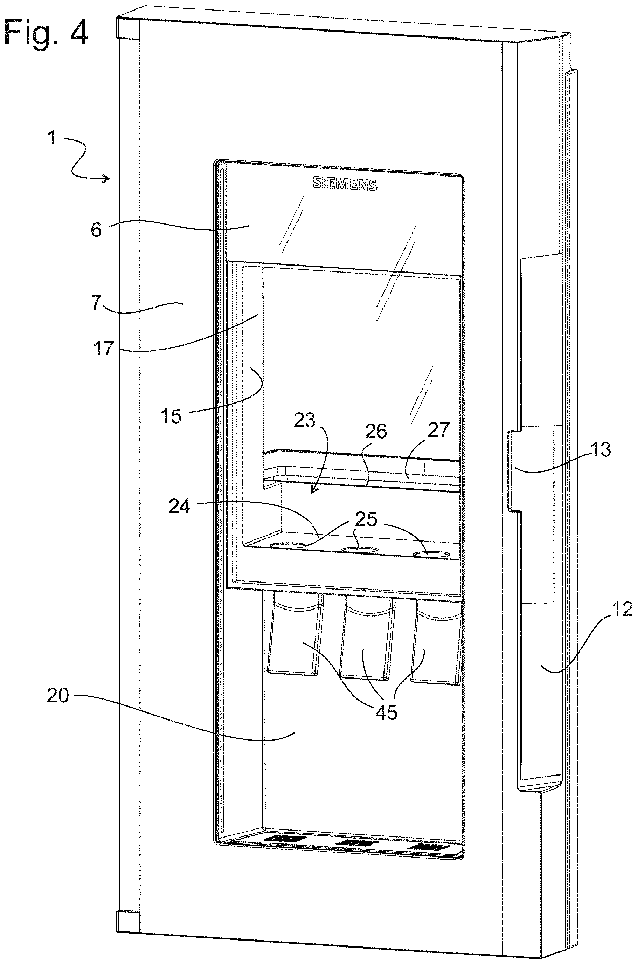

Fig. 4 zeigt eine Ansicht der Türbaugruppe 1 aus derselben Perspektive wie Fig. 1, allerdings ohne die Getränkebehälter 22, so dass durch die Isolierglasscheibe 17 eine Bodenplatte 24 der Nische 23 sichtbar ist, die anderenfalls von den Getränkebehältern 22 bedeckt wäre. Die Bodenplatte 24 weist zu jedem Getränkebehälter 22 einen Durchgang 25 auf, der die Nische 23 mit der darunterliegenden Dispensernische 20 verbindet.

An einem hinteren Rand der Bodenplatte 24 ragt eine Zwischenwand 26 auf, die die Nische 23 von dem Lagerfach 21 abgrenzt. Jenseits der Zwischenwand 26 ist ein Türabsteller 27 an der Innenwand 15 aufgehängt.

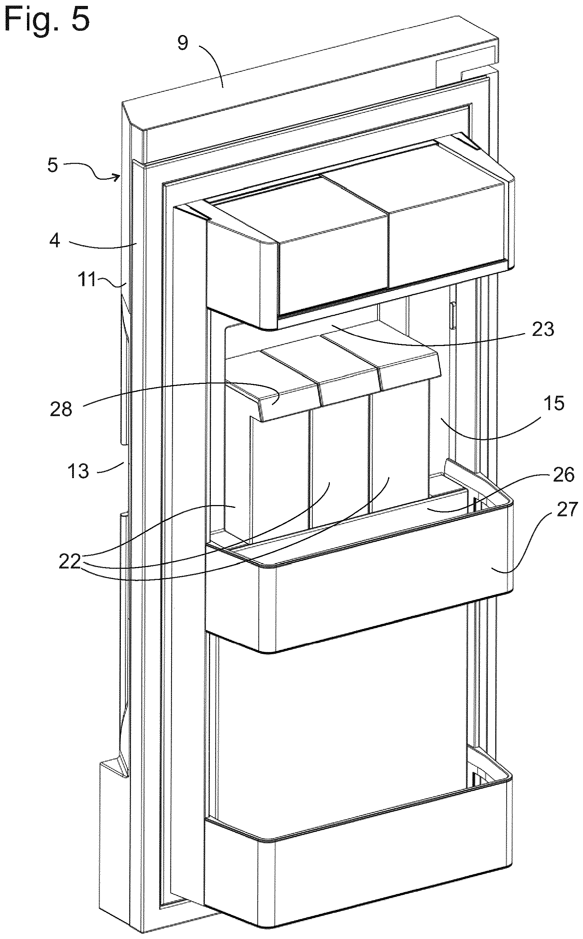

Fig. 5 zeigt eine Ansicht der dem Lagerfach 21 zugewandten Innenseite der Türbaugruppe 1. Die Getränkebehälter 22 sind in der Nische 23 mit ausreichend Spiel in der Vertikalen aufgenommen, so dass sie in der Nische 23 angehoben, ggf. gekippt und über die Zwischenwand 26 hinweg aus der Nische 23 entnommen werden können.

Um das Einsetzen und die Entnahme der im wesentlichen quaderförmigen Getränkebehälter 22 aus der Nische 23 zu erleichtern, können diese jeweils an ihrer der Zwischenwand 26 zugewandten Rückseite mit einem Griff 28 versehen sein, wie beispielsweise in der Fig. 5 gezeigt, in Form eines sich über die gesamte Breite des Getränkebehälters 22 erstreckenden Vorsprungs, der an seiner Unterseite hohl ist, um das Eingreifen von Fingern eines Benutzers zu ermöglichen.

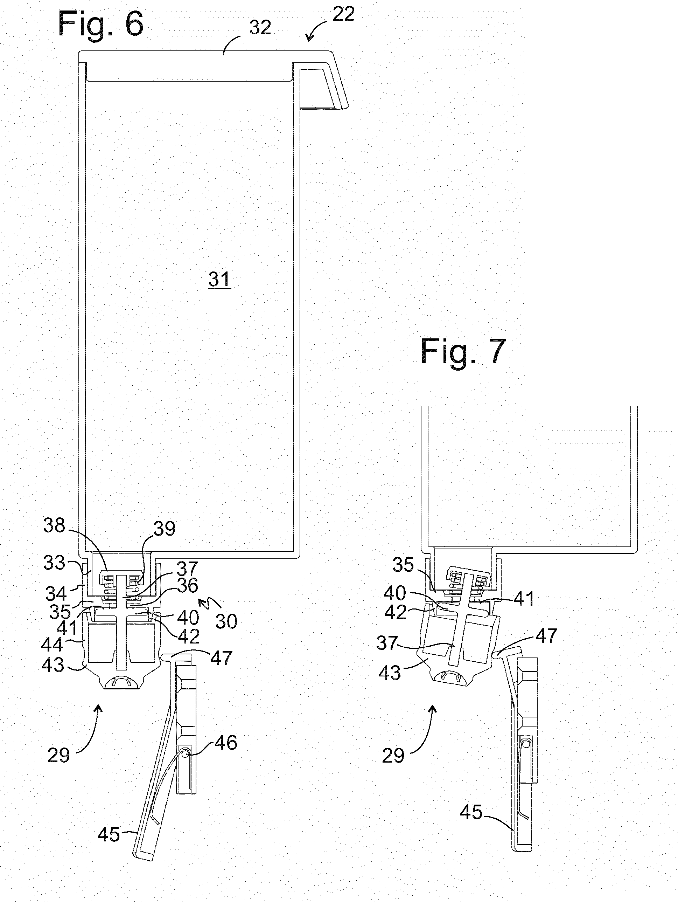

Fig. 6 zeigt einen vertikalen Schnitt durch einen der Getränkebehälter 22 und ein Ventil 29, das mit dem Getränkebehälter 22 zu einer Behälter-Ventil-Baugruppe 30 verbunden ist. Der Getränkebehälter 22 umfasst ein aus vorzugsweise glasklarem Kunststoff geformtes quaderförmiges Behälterunterteil 31, dessen offene Oberseite durch einen Deckel 32 verschlossen ist. Der Deckel 32 dichtet hier, indem ein Vorsprung des Deckels 32 in das Behälterunterteil 31 eingreift und an den Innenseiten von dessen Wänden reibschlüssig anliegt.

Am Boden des Behälterunterteils 31 ist ein Auslassstutzen 33 einteilig angeformt, der, wenn der Getränkebehälter 22 in der Nische 23 montiert ist und auf der Bodenplatte 24 ruht, in deren Durchgang 25 eingreift. Der Auslassstutzen 33 weist ein Außengewinde auf, auf das ein Adapterabschnitt 34 des Ventils 29 aufgeschraubt ist. Der Durchmesser des Adapterabschnitts 34 ist so bemessen, dass er den Durchgang 25 auf dessen gesamtem Querschnitt ausfüllt und so die relativ warme Luft der Dispensernische 20 vom Boden des Behälterunterteils 31 fernhält, und so Wärmeübertragung von dieser Luft auf den Inhalt des Getränkebehälters 22 minimiert.

Der Adapterabschnitt 34 hat eine Grundplatte 35, die das untere Ende des Auslassstutzens 33 überdeckt und an deren Oberseite im aufgeschraubten Zustand der Inhalt des Getränkebehälters 22 ansteht. Durch eine zentrale Öffnung 36 der Grundplatte 35 erstreckt sich ein Stift 37. Auf das obere Ende des Stifts 37 ist eine Kappe 38 aufgeschraubt, und eine Schraubenfeder 39 ist zwischen der Kappe 38 und der Oberseite der Grundplatte 35 elastisch zusammengedrückt. An einem mittleren Abschnitt des Stifts 37 ist ein kreisscheibenförmiger Schließkörper 40 befestigt, der durch die Spannung der Schraubenfeder 39 rings um die Öffnung 36 dicht an einen Ventilsitz 41 an der Unterseite der Grundplatte 35 angedrückt gehalten ist. Der Ventilsitz 41 ist rings umgeben von einem von der Grundplatte 35 nach unten abstehenden Steg 42.

Das untere Ende des Stifts 37 bildet einen Betätigungsabschnitt 58, an dessen unterem Ende ein becherförmiges Element 43 befestigt ist. Im montierten Zustand ragt das Element 43 von oben in die Dispensernische 20 hinein. Ein Durchlass für abgezapften Inhalt des Behälters 22 ist am Boden des Elements 43 gebildet. Der - ggf. aus mehreren Einzelöffnungen gebildete- Durchlass liegt außerhalb der Schnittebene der Fig. 6 und ist daher nicht sichtbar, zu erkennen ist jedoch eine Abtropfkante 59, die den Durchlass umgibt. Eine rings um den Boden umlaufende Wand 44 des Elements 43 überlappt vertikal mit dem Steg 42, berührt aber weder den Steg 42 noch die Grundplatte 35, so dass sie ein Kippen des Schließkörpers 40 in die offene Stellung nicht behindert. Der Durchmesser des becherförmigen Elements 43 ist nicht größer als der des Adapterabschnitts 34, so dass, wenn der Behälter 22 leer ist, die komplette Behälter-Ventil-Baugruppe 30 angehoben werden kann, bis sich das Element 43 in der Nische 23 befindet und aus dieser in Richtung zum Lagerfach 21 hin entnommen werden kann.

Das in Fig. 6 ebenfalls im Schnitt gezeigte Bedienpaddel 45 bildet einen Arm eines um eine zur Schnittebene senkrechte Achse 46 gegen die Kraft einer Rückstellfeder schwenkbaren zweiarmigen Hebels. Ein zweiter Arm 47 des Hebels ist geformt und bemessen, um, wenn das Bedienpaddel 45 durch ein dagegengedrücktes Gefäß ausgelenkt ist, aus seitlicher Richtung gegen das becherförmige Element 43 zu drücken. Wenn dabei das Element 43 ausgelenkt wird, kippt der Stift 37 um einen Angelpunkt 60 am Ventilsitz 41, und der Schließkörper 40 löst sich, wie in Fig. 7 gezeigt, abseits des Angelpunkts 60 vom Ventilsitz 41. Das Ventil 29 ist nun offen. Der Steg 42 stellt sicher, dass hindurchtretende Flüssigkeit nicht zwischen der Grundplatte 35 und der Oberkante des becherförmigen Elements 43 hindurch seitwärts aus dem Ventil 29 entweichen kann, sondern sich im becherförmigen Element 43 sammelt und über dessen Durchlass in das Gefäß abfließt.

Die Lage des Angelpunkts 60 auf dem Ventilsitz 41 ist nicht durch den Aufbau des Ventils 29 festgelegt, sondern lediglich durch die Richtung, in die das Element 43 zur Seite gedrückt wird. Daher ist das korrekte Funktionieren des Ventils 29 nicht davon abhängig, wie weit es auf den Auslassstutzen 33 aufgeschraubt wird; es funktioniert in jeder Orientierung und kann daher immer genau so weit aufgeschraubt werden, wie für einen dichten Anschluss an den Auslassstutzen 33 erforderlich.

Wenn der leere Behälter 22 entnommen worden ist, kann er mit wenigen Handgriffen in Einzelteile zerlegt werden, die problemlos in einer Spülmaschine gereinigt werden können. Am Ventil 29 kann, nachdem es vom Behälterunterteil 31 abgeschraubt worden ist, die Kappe 38 vom Stift 37 abgeschraubt werden, woraufhin sich der Stift 37 mitsamt dem Schließkörper 40 vom Adapterabschnitt 34 löst und alle mit Getränk in Berührung gekommenen Oberflächen zum Abspülen freiliegen. Auch das becherförmige Element 43 kann vom Stift 37 abschraubbar sein, um den Zugang zu dem im Gebrauch durch den Schließkörper 40 weitgehend verschlossenen Innenraum des becherförmigen Elements 43 zu erleichtern.

Die Durchgänge 25 in der Bodenplatte 24 bilden im Vergleich zu der Schaumstoffschicht der Tür 3, durch die sie sich erstrecken, zwar auch hier unvermeidlicherweise eine Schwachstelle der Wärmedämmung, doch fällt diese beim erfindungsgemäßen Kältegerät nur wenig ins Gewicht, da die Abdeckung 5 einen freien Luftaustausch zwischen der Dispensernische 20 und der Umgebung des Kältegeräts verhindert und sich aus diesem Grund, wenn die Abdeckung 5 nicht beiseitegeschwenkt wird, um auf die Dispensernische 20 zuzugreifen, sich in letzterer eine deutlich tiefere Temperatur als in der Umgebung einstellt.

Um eine möglichst große Temperaturdifferenz zwischen der Dispensernische 20 und der Umgebung zu erreichen, kann die Abdeckung 5 selber mit einer geschäumten Wärmedämmschicht 48 (s. Fig. 2, 3) versehen sein, und die Fensterscheibe 6 kann entsprechend der Isolierglasscheibe als Doppel- oder Mehrfachverglasung mit wärmedämmender Gasfüllung zwischen den Glasplatten ausgebildet sein. Ferner kann - analog zu einer üblichen Magnetdichtung 49 zwischen Tür 4 und Korpus 1 - eine Dichtung 50, vorzugsweise an der Innenseite der Abdeckung 5 befestigt, vorgesehen sein, die in geschlossener Stellung der Abdeckung 5 rings um die Dispensernische 20 herum zwischen der Abdeckung 5 und der Tür 4 geklemmt ist und so jeglichen Luftaustausch zwischen der Dispensernische 20 und der Umgebung über einen Spalt 51 zwischen Abdeckung 5 und Tür 4 verhindert.

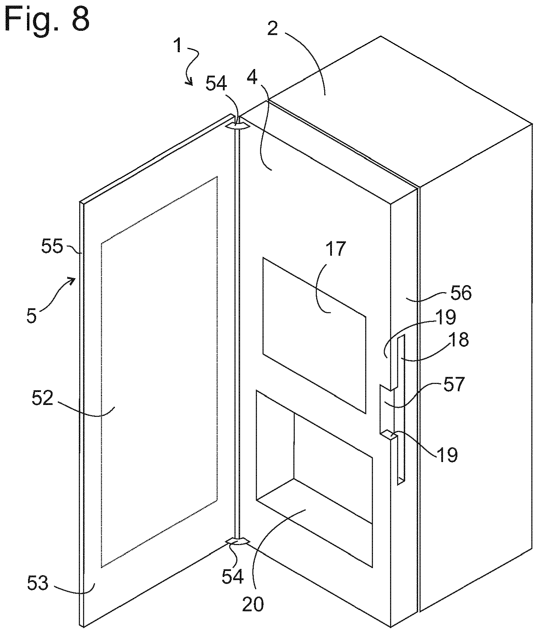

Fig. 8 zeigt ein Kältegerät gemäß einer zweiten Ausgestaltung der Erfindung in einer perspektivischen Ansicht. Auch hier umfasst das Gehäuse des Kältegeräts eine Türbaugruppe 1 aus Tür 4 und Abdeckung 5, sowie einen Korpus 2. Die Abdeckung 5 ist hier eine rechteckige ebene Platte, vorzugsweise aus Sicherheitsglas, die in geschlossener Stellung die Tür 4 verdeckt. In einem zentralen Bereich 52 ist die Platte transparent, so dass in der geschlossenen Stellung der Abdeckung die Isolierglasscheibe 17 und die Dispensernische 20 durch den zentralen Bereich 52 hindurch sichtbar sind. Ein Randbereich 53 kann mit einer undurchsichtigen Beschichtung versehen sein, die in der geschlossenen Stellung z. B. Beschläge 54 verbirgt, über die die Abdeckung 5 mit der Tür 4 verbunden ist. Die Dichtung 50 ist, wenn vorhanden, an die Innenseite der Beschichtung des Randbereichs 53 angeklebt.

Die von den Beschlägen 54 abgewandte seitliche Kante 55 der Abdeckung ist hier gerade. In einer in geschlossener Stellung hinter der Kante 55 liegenden Flanke 56 der Tür 4 ist eine Griffnut 18 geformt, und ein Steg 19, der sich zwischen der Griffnut 18 und der Vorderseite der Tür 4 erstreckt, ist in einem mittleren Abschnitt 57 unterbrochen. Greift ein Benutzer in Höhe dieses mittleren Abschnitts 57 um die Kante 55 herum, bekommt er die Tür 4 nicht zu fassen, so dass er nur die Abdeckung 5 öffnen kann. Greift er hingegen ober- oder unterhalb des mittleren Abschnitts 57 um die Kante 55 herum, so bekommt er die Rückseite der Abdeckung 5 nicht zu fassen, weil sie von dem Steg 19 verdeckt ist. In diesem Fall können seine Finger nur hinter dem Steg 19 in der Griffnut 18 halt finden, und die gesamte Türbaugruppe wird vom Korpus 2 fortgeschwenkt.

### BEZUGSZEICHEN

- 1: Türbaugruppe
- 2: Korpus
- 3: Achse
- 4: Tür
- 5: Abdeckung
- 6: Fensterscheibe
- 7: Rahmen
- 8: Schenkel
- 9: Schenkel
- 10: Schenkel
- 11: Schenkel
- 12: Griffaussparung
- 13: Mittelstück
- 14: Außenwand
- 15: Innenwand
- 16: Hohlraum
- 17: Isolierglasscheibe
- 18: Griffnut
- 19: Steg
- 20: Dispensernische
- 21: Lagerfach
- 22: Getränkebehälter
- 23: Nische
- 24: Bodenplatte
- 25: Durchgang
- 26: Zwischenwand
- 27: Türabsteller
- 28: Griff
- 29: Ventil
- 30: Behälter-Ventil-Baugruppe
- 31: Behälterunterteil
- 32: Deckel
- 33: Auslassstutzen
- 34: Adapterabschnitt
- 35: Grundplatte
- 36: Öffnung
- 37: Stift
- 38: Kappe
- 39: Schraubenfeder
- 40: Schließkörper
- 41: Ventilsitz
- 42: Steg
- 43: becherförmiges Element
- 44: Wand
- 45: Bedienpaddel
- 46: Achse
- 47: Arm
- 48: Wärmedämmschicht
- 49: Magnetdichtung
- 50: Dichtung
- 51: Spalt
- 52: zentraler Bereich
- 53: Randbereich
- 54: Beschlag
- 55: Kante
- 56: Flanke
- 57: mittlerer Abschnitt
- 58: Betätigungsabschnitt
- 59: Abtropfkante
- 60: Angelpunkt

## Patentansprüche

1. Kältegerät, insbesondere Haushaltskältegerät, mit einer Dispensernische (20), und einem wärmedämmenden Gehäuse, das ein Lagerfach (21) für Kühlgut umgibt und wenigstens einen Durchgang (25) zwischen dem Lagerfach (21) und der Dispensernische (20) aufweist, wobei die Dispensernische (20) außerhalb des wärmedämmenden Gehäuses liegt , und einer Behälter-Ventil-Baugruppe (30) die einen Behälter (22) und ein Ventil aufweist, wobei eine Abdeckung (5), durch die die Dispensernische (20) verschließbar ist, an das Gehäuse angelenkt ist, wobei ein Bedienpaddel (45) in der Dispensernische (20) montiert ist, das dazu dient das Ventil (29) zu öffnen und ein in der Dispensernische (20) gegen das Bedienpaddel (45) angedrücktes Gefäß mit Getränk aus dem darüberliegenden Behälter (22) zu befüllen, wobei das Bedienpaddel (45) unabhängig von der Behälter-Ventil-Baugruppe (30) in der Dispensernische (20) montiert ist, wobei das Bedienpaddel (45) einen Arm eines schwenkbaren zweiarmigen Hebels bildet, wobei ein zweiter Arm (47) des Hebels geformt und bemessen ist, um, wenn das Bedienpaddel (45) durch das dagegengedrückte Gefäß ausgelenkt ist, aus seitlicher Richtung gegen das Ventil (29) zu drücken, **dadurch gekennzeichnet, dass** die Behälter-Ventil-Baugruppe (30) in dem Lagerfach (21) den Durchgang (25) durchsetzend lösbar montiert ist, wobei ein Behälter (22) mit einem Ventil (29) zu der Behälter-Ventil-Baugruppe (30) verbunden ist.

2. Kältegerät nach Anspruch 1, **dadurch gekennzeichnet, dass** das Gehäuse wenigstens ein Sichtfenster (17) aufweist, durch das ein in dem Lagerfach (21) angeordneter Behälter (22) der Behälter-Ventil-Baugruppe (30) sichtbar ist und/oder wenigstens ein dem Sichtfenster (17) zugewandter Bereich des Behälters (22) lichtdurchlässig ist und/oder die Abdeckung (5) sich über das Sichtfenster (17) erstreckt.

3. Kältegerät nach einem der vorhergehenden Ansprüche, **dadurch gekennzeichnet, dass** die Abdeckung (5) wenigstens teilweise transparent ist und/oder die Dispensernische (20) in einer Tür (4) des Kältegeräts untergebracht ist und die Abdeckung (5) die gesamte Tür (4) überdeckt und/oder die Behälter-Ventil-Baugruppe (30) einen Adapterabschnitt (34) aufweist, der den Querschnitt des Durchgangs (25) ausfüllt.

4. Kältegerät nach einem der vorhergehenden Ansprüche, **dadurch gekennzeichnet, dass** der Behälter (22) in eine Nische (23) an der Innenseite des Gehäuses eingesetzt ist.

5. Kältegerät nach Anspruch 4, **dadurch gekennzeichnet, dass** die Behälter (22) die Nische (23) der Breite nach ausfüllt.

6. Kältegerät nach einem der vorhergehenden Ansprüche, **dadurch gekennzeichnet, dass** der Behälter (22) in einem oberen Bereich einen Deckel (32) aufweist und das Ventil (29) an einem Auslass (33) in einem unteren Bereich des Behälters (22) lösbar montiert ist.

7. Kältegerät nach einem der vorhergehenden Ansprüche, **dadurch gekennzeichnet, dass** es mehrere jeweils einen Behälter (22) und einen Auslass (33) umfassende Baugruppen aufweist.

8. Kältegerät nach Anspruch 7 **dadurch gekennzeichnet, dass** die Behälter (22) ebene, einander berührende Seitenwände aufweisen.

9. Kältegeräts nach einem der vorhergehenden Ansprüche **dadurch gekennzeichnet, dass** das Ventil (29) mit einem sich ringförmig um eine Öffnung (36) erstreckenden Ventilsitz (41) und einem Schließkörper (40), der in einer geschlossenen Stellung rings um die Öffnung (36) am Ventilsitz (41) anliegt und zwischen der geschlossenen und einer offenen Stellung um einen Angelpunkt (60) kippbar ist, an dem Ventilsitz (41) und Schließkörper einander in der offenen Stellung berühren.

10. Kältegerät nach Anspruch 9, **dadurch gekennzeichnet, dass** der Ventilsitz (41) in einem Adapterabschnitt (34) gebildet ist, der ein Schraubgewinde zum Anschrauben an einen Behälter (22) aufweist.

11. Kältegerät nach Anspruch 9 oder 10, **dadurch gekennzeichnet, dass** ein mit dem Schließkörper (40) fest verbundener Stift (37) sich durch die Öffnung (36) erstreckt und/oder der Schließkörper (40) durch eine Feder (39) in die geschlossene Stellung beaufschlagt ist.

12. Kältegerät nach Anspruch 11, **dadurch gekennzeichnet, dass** an einem vom Schließkörper abgewandten Ende des Stifts (37) eine Kappe (38) vorgesehen ist und die Feder (39) zwischen der Kappe (38) und einer Grundplatte (35), in der die Öffnung (36) gebildet ist, komprimiert ist.

13. Kältegerät nach Anspruch 12, **dadurch gekennzeichnet, dass** die Kappe (38) mit dem Stift (37) lösbar verbunden, insbesondere schraubverbunden ist.

14. Kältegerät nach einem der Ansprüche 9 bis 13, **dadurch gekennzeichnet, dass** ein Betätigungsabschnitt (58) vom Schließkörper (40) in Durchflussrichtung des Ventils (29) absteht.

15. Kältegerät nach Anspruch 14, **dadurch gekennzeichnet, dass** an dem Betätigungsabschnitt ein einen Durchlass im Becherboden aufweisendes becherförmiges Element (43) angebracht ist und/oder ein sich um den Ventilsitz (41) herum ersteckender Steg (42) in das becherförmige Element (43) eingreift.

## Claims

1. Refrigeration appliance, in particular household refrigeration appliance, having a dispenser recess (20), and a heat-insulating housing, which surrounds a storage compartment (21) for refrigerated goods, and at least one opening (25) between the storage compartment (21) and the dispenser recess (20), wherein the dispenser recess (20) is disposed outside of the heat-insulating housing, and a container-valve assembly (30), which has a container (22) and a valve, wherein a cover (5), by means of which the dispenser recess (20) can be closed off, is hinged to the housing, wherein an operating paddle (45) is assembled in the dispenser recess (20), which is used to open the valve (29) and to fill a vessel pressed against the operating paddle (45) in the dispenser recess (20) with beverage from the above-lying container (22), wherein the operating paddle (45) is assembled in the dispenser recess (20) independently of the container valve assembly (30), wherein the operating paddle (45) forms an arm of a pivotable two-arm lever, wherein a second arm (47) of the lever is moulded and dimensioned in order, when the operating paddle (45) is deflected by the vessel pressed against it, to push against the valve (29) from the lateral direction, **characterised in that** the container-valve assembly (30) in the storage compartment (21) is detachably assembled to penetrate the opening (25), wherein a container (22) is connected with a valve (29) to the container-valve assembly (30).

2. Refrigeration appliance according to claim 1, **characterised in that** the housing has at least one clear-view window (17), through which a container (22) pertaining to the container-valve assembly (30) arranged in the storage compartment (21) is visible and/or at least one region of the container (22) which faces the clear-view window (17) is translucent and/or the cover (5) extends across the clear-view window (17).

3. Refrigeration appliance according to one of the preceding claims, **characterised in that** the cover (5) is at least partially transparent and/or the dispenser recess (20) is accommodated in a door (4) of the refrigeration appliance and the cover (5) covers the entire door (4) and/or the container-valve assembly (30) has an adapter section (34), which fills the cross-section of the opening (25).

4. Refrigeration appliance according to one of the preceding claims, **characterised in that** the container (22) is inserted into a recess (23) on the inner surface of the housing.

5. Refrigeration appliance according to claim 4, **characterised in that** the container (22) fills the recess (23) widthways.

6. Refrigeration appliance according to one of the preceding claims, **characterised in that** the container (22) has a lid (32) in an upper region and the valve (29) is detachably assembled on an outlet (33) in a lower region of the container (22).

7. Refrigeration appliance according to one of the preceding claims, **characterised in that** it has a number of assemblies comprising in each case a container (22) and an outlet (33).

8. Refrigeration appliance according to claim 7, **characterised in that** the container (22) has flat side walls which touch one another.

9. Refrigeration appliance according to one of the preceding claims, **characterised in that** the valve (29) with a valve seat (41) which extends in an annular manner about an opening (36) and a closing element (40) which, in a closed position, rests on the valve seat (41) all around the opening (36) and can be tilted between the closed and an open position about a pivotal point (60), touch the valve seat (41) and the closing element in the open position.

10. Refrigeration appliance according to claim 9, **characterised in that** the valve seat (41) is formed in an adapter section (34), which has a screw thread for screwing to a container (22).

11. Refrigeration appliance according to claim 9 or 10, **characterised in that** a pin (37) which is fixedly connected to the closing element (40) extends through the opening (36) and/or the closing element (40) is forced into the closed position by a spring (39).

12. Refrigeration appliance according to claim 11, **characterised in that** a cap (38) is provided at one end of the pin (37) which faces away from the closing element and the spring (39) is compressed between the cap (38) and a base plate (35), in which the opening (36) is formed.

13. Refrigeration appliance according to claim 12, **characterised in that** the cap (38) is detachably connected to the pin (37), in particular connected with screws.

14. Refrigeration appliance according to one of claims 9 to 13, **characterised in that** an actuation section (58) projects from the closing element (40) in the flow direction of the valve (29).

15. Refrigeration appliance according to claim 14, **characterised in that** a cup-shaped element (43) having a passage in the cup base is attached to the actuation section and/or a web (42) extending around the valve seat (41) engages in the cup-shaped element (43).

## Revendications

1. Appareil frigorifique, en particulier appareil frigorifique électroménager, comprenant une niche de distribution (20) et un bâti thermo-isolant, lequel entoure un compartiment de rangement (21) pour des produits réfrigérés, et comprend au moins un passage (25) entre le compartiment de rangement (21) et la niche de distribution (20), dans lequel la niche de distribution (20) se trouve à l'extérieur du bâti thermo-isolant, et comprend un ensemble séparable conteneur-vanne (30) qui comprend un conteneur (22) et une vanne,
dans lequel un recouvrement (5), grâce auquel on peut fermer la niche de distribution (20), est articulé au bâti, dans lequel une palette de commande (45) est assemblée dans la niche de distribution (20), qui sert à ouvrir la vanne (29) et à remplir un récipient qu'on a poussé dans la niche de distribution (20) contre la palette de commande (45) avec une boisson du conteneur (22) situé au-dessus, dans lequel la palette de commande (45) est assemblée dans la niche de distribution (20) de manière indépendante de l'ensemble séparable conteneur-vanne (30),
dans lequel la palette de commande (45) forme un bras d'un levier articulé à deux bras, dans lequel un deuxième bras (47) du levier est façonné et dimensionné pour appuyer latéralement contre la vanne (29) quand la palette de commande (45) est articulée par le récipient qu'on a poussé sur elle,
**caractérisé en ce que** l'ensemble séparable conteneur-vanne (30) dans le compartiment de rangement (21) est assemblé en force dans le passage (25) de manière démontable, dans lequel un conteneur (22) est raccordé à une vanne (29) à l'ensemble séparable conteneur-vanne (30).

2. Appareil frigorifique selon la revendication 1, **caractérisé en ce que** le bâti comprend au moins un hublot (17), à travers lequel on peut voir un conteneur (22) se trouvant dans le compartiment de rangement (21) de l'ensemble séparable conteneur-vanne (30) et/ou au moins une zone du conteneur (22) tournée vers le hublot (17) laisse passer la lumière et/ou le recouvrement (5) s'étend sur le hublot (17).

3. Appareil frigorifique selon l'une des revendications précédentes, **caractérisé en ce que** le recouvrement (5) est au moins partiellement transparent et/ou une porte (4) de l'appareil frigorifique abrite la niche de distribution (20) et le recouvrement (5) recouvre toute la porte (4) et/ou l'ensemble séparable conteneur-vanne (30) comprend une section d'adaptation (34) qui remplit la section du passage (25).

4. Appareil frigorifique selon l'une des revendications précédentes, **caractérisé en ce que** le conteneur (22) est inséré dans une niche (23) sur le côté intérieur du bâti.

5. Appareil frigorifique selon la revendication 4, **caractérisé en ce que** le conteneur (22) remplit la niche (13) dans sa largeur.

6. Appareil frigorifique selon l'une des revendications précédentes, **caractérisé en ce que** le conteneur (22) comprend dans une zone supérieure, un couvercle (32) et la vanne (29) est assemblée démontable sur une sortie (33) dans une zone inférieure du conteneur (22).

7. Appareil frigorifique selon l'une des revendications précédentes, **caractérisé en ce qu'**il comprend plusieurs ensembles séparables comprenant à chaque fois un conteneur (22) et une sortie (33).

8. Appareil frigorifique selon la revendication 7, **caractérisé en ce que** les conteneurs (22) comprennent des parois latérales planes qui se touchent mutuellement.

9. Appareil frigorifique selon l'une des revendications précédentes, **caractérisé en ce que** la vanne (29) comprend un siège de vanne (41) s'étendant de manière annulaire autour d'un orifice (36) et un corps de fermeture (40), lequel en position fermée, est situé en anneau autour de l'orifice (36) sur le siège de vanne (41) et peut basculer entre la position fermée et une position ouverte autour d'un pivot (60), sur le siège de vanne (41) et les corps de fermeture se touchent mutuellement en position ouverte.

10. Appareil frigorifique selon la revendication 9, **caractérisé en ce que** le siège de vanne (41) est formé dans une section d'adaptation (34) qui comprend un filet pour vissage sur un conteneur (22).

11. Appareil frigorifique selon la revendication 9 ou 10, **caractérisé en ce qu'**une tige (37) raccordée fixement au corps de fermeture (40) s'étend à travers l'orifice (36) et/ou le corps de fermeture (40) est sollicité par un ressort (39) pour entrer en position fermée.

12. Appareil frigorifique selon la revendication 11, **caractérisé en ce que** sur une extrémité de la tige (37) tournant le dos au corps de fermeture se trouve un cache (38) et le ressort (39) est comprimé entre le cache (38) et une plaque de plancher (35) dans laquelle l'orifice (36) est formé.

13. Appareil frigorifique selon la revendication 12, **caractérisé en ce que** le cache (38) est raccordé démontable avec la tige (37), et est en particulier raccordé par vissage.

14. Appareil frigorifique selon l'une des revendications 9 à 13, **caractérisé en ce qu'**une section d'actionnement (58) reste à distance du corps de fermeture (40) dans le sens de flux de la vanne (29).

15. Appareil frigorifique selon la revendication 14, **caractérisé en ce que** sur la section d'actionnement se trouve un élément en forme de godet (43) comprenant un écoulement dans le plancher du godet et/ou une tige (42) s'étendant autour du siège de vanne (41), s'engage dans l'élément en forme de godet (43).
